# EUROPEAN PATENT APPLICATION

(11) **EP 4 186 736 A1**
(43) Date of publication of application: **31.05.2023**
(21) Application number: 22209814.7
(22) Date of filing: 28.11.2022
(51) Int. Cl.: B60L 50/60, B60L 53/16

(54) **INTERFACE FOR VEHICLES CHARGING SOCKETS WITH INTEGRATED SAFETY SYSTEM**

(30) Priority: 30.11.2021 IT 202100030296
(71) Applicant: Bitron S.p.A., 10122 Torino (IT)
(72) Inventor: FRIGNANI, Alberto, 43125 Parma (IT)
(74) Representative: Boario, Enrico

(57) **Abstract**

Interface (3) for charging sockets (2) of vehicles (1), adapted to return to the user of a charging socket (2) information about the charging state of at least one battery comprised in the vehicle (1). Said interface (3) is adapted to be housed in a compartment (11) positioned outside a passenger compartment of the vehicle (1), in which said charging socket (2) can be positioned.

Said interface (3) comprising: a supporting structure (32) extending along a vertical axis (Z); - a processing unit (30) adapted to process the data relating to the charging of said battery; and at least one visual feedback element (33) adapted to, at least partly, return to the user visual information about the charging state of said at least one battery, said at least one visual feedback element (33) being driven by said processing unit (30).
said interface (3) comprises a safety system (5) adapted to: suitably lock a plug (4) into the charging socket (2) during a battery charging procedure for charging said at least one battery; and release said plug (4) at the end of said charging procedure.

Said safety system (5) being integrated in the supporting structure (32) of the interface (3). Said safety system (5) being driven by said processing unit (30).

## Description

The present invention relates to an interface for charging sockets of vehicles, e.g. electric vehicles and/or hybrid vehicles, which can return to the user one or more pieces of information about the charging state of at least one battery comprised in the vehicle.

Said interface is essentially a human-machine interface (HMI), which is located outside the passenger compartment of the vehicle and provides the user with useful feedback, e.g. visual feedback, concerning the state of charge of the battery and/or the battery charging procedure.

Interfaces for vehicular charging sockets are known which comprise a processing unit that can be programmed for controlling also a safety system capable of ensuring that the process of charging a battery of vehicle 1 is conducted correctly.

Said safety system is a separate device that may be controlled either directly by a central control unit or via said interface.

Safety systems are known which are integrated into the charging socket itself, and which require, in order to operate correctly, a dedicated control unit.

More generally, said safety system comprises a control circuit adapted to drive an actuator adapted to move a latch. Said latch is moved by said actuator between a release configuration, in which a plug can be inserted into and removed from the charging socket, and a lock configuration, in which said latch acts upon said plug, in particular by fitting into a suitable housing formed in the structure of the plug itself, thereby locking said plug in association with said charging socket and preventing said plug from separating from said charging socket.

As a matter of fact, all vehicular battery charging systems, whatever the standard they are compliant with, are designed to permit the flow of high currents in order to transfer electric energy as fast as possible and quickly recharge the vehicle's batteries.

There is an increasing demand for safe charging sockets equipped with a safety system ensuring safe removal of the plug from the charging socket. For example, said safety system permits releasing the plug from the charging socket only when the value of the current flowing therethrough is below a safe current value.

In the automotive industry, the need is constantly felt for simplifying the vehicle's onboard systems, for the purpose of reducing production, sale and maintenance costs, while at the same time trying to standardize the various components.

Patent US5757595A discloses an apparatus for displaying the charging of the battery of an electric vehicle, comprising a charging connector mounted on an outer panel of the body of the electric vehicle, a lid openably mounted on the panel in covering relation to the charging connector and a cavity defined in the outer panel, and a display panel disposed in the cavity for displaying a period of time required until the battery is fully charged and/or a charged capacity of the battery. The driver of the electric vehicle can easily recognize the remaining time required until the battery is fully charged and a percentage of the fully charged capacity of the battery to which the battery is presently charged, from outside of the electric vehicle. The driver is not required to confirm the state of charge of the battery with an indicator on a battery charger or within the passenger's compartment of the electric vehicle, but can easily confirm the state of charge of the battery from outside of the electric vehicle.

Furthermore, the following prior-art documents US2014167915A1, US2017217403, JP5486397B2 and US2014179141A1 disclose safety systems adapted to suitably lock a plug in association with the charging socket during a procedure for charging said at least one battery; and to allow said plug to be decoupled from the charging socket at the end of said charging procedure. All the safety systems described in the above-mentioned prior-art documents are separate devices driven by a dedicated control unit, which is added to the other control units that are already present in a plug-socket system for charging vehicles, such as, for example, the control unit of the charging socket interface. None of the above-mentioned prior-art documents suggests to integrate said safety system into another device comprised in the charging socket, e.g. the charging socket interface.

The solutions currently known in the art make use of redundant elements for the safety systems and the interfaces, particularly as regards the control/processing units, thus increasing the production, assembly and maintenance costs. In fact, in the systems currently known in the art such devices are not mutually integrated as far as control and structure are concerned.

In general, the present invention aims at solving these and other technical problems by providing an interface for charging sockets which incorporates the safety system both structurally and from a control viewpoint, thus forming an assembly.

One aspect of the present invention relates to an interface having the features set out in the appended claim 1.

A further aspect of the present invention relates to a charging socket having the features set out in the appended claim 7.

Yet another aspect of the present invention relates to a vehicle having the features set out in the appended claim 10.

Auxiliary features of the interface, socket, and vehicle are set out in respective dependent claims appended hereto.

The features and advantages of the interface, socket, and vehicle will become clear and apparent in light of the following description of several possible embodiments of the interface, socket, and vehicle, provided herein by way of non-limiting example, as well as from the annexed drawings, wherein:
- Figures 1A and 1B show a schematic view of one possible, but merely illustrative and non-limiting, embodiment of the interface according to the present invention with the integrated safety system in two different states; in particular, Figure 1A shows the safety system in a release configuration; whereas Figure 1B shows the safety system in a lock configuration;
- Figure 2 shows a schematic view of an interface according to the present invention associated with a vehicular charging socket, both of which are housed in a compartment that can be closed by means of a closing element, particularly a door;
- Figure 3 shows a schematic view of a portion of a vehicle comprising a charging socket to which a cable of a battery charger is connected;
- Figure 4 shows a schematic view of a further embodiment of the interface according to the present invention associated with a charging socket for vehicles.

With reference to the above-listed figures, reference numeral 3 designates as a whole the interface according to the present invention. Reference numeral 2 designates as a whole the charging socket, while reference numeral 4 designates as a whole a plug. Lastly, reference numeral 1 identifies a vehicle comprising a charging socket and an interface according to the present invention.

Interface 3 according to the present invention is particularly suitable for being coupled to charging sockets 2 of vehicles 1.

Interface 3 according to the present invention is adapted to return to the user of a charging socket 2 information about the charging state of at least one battery comprised in vehicle 1.

Preferably, said interface 3 is adapted to be housed in a compartment 11 positioned outside a passenger compartment of vehicle 1, in which compartment 11 said charging socket 2 is preferably also located. Preferably, said interface 3 and said charging socket 2 are arranged side by side.

Preferably, said compartment 11, including at least said charging socket 2, and optionally also said interface 3, can be selectively closed by means of a movable closing element 10, e.g. a door.

Said interface 3 according to the present invention comprises a supporting structure 32. Said supporting structure 32 extends along an axis, e.g. a vertical axis "Z".

Said supporting structure 32 also defines a contact surface 321 that can be touched by a user.

More generally, said interface 3 comprises a processing unit 30. Said processing unit 30 is adapted to process the data relating to the charging of said battery, in particular to return to the user information about the charging state of at least one battery comprised in vehicle 1.

Said interface 3 further comprises at least one visual feedback element 33 adapted to, at least partly, return to the user visual information about the charging state of said at least one battery. Said at least one visual feedback element 33 is driven by said processing unit 30.

Said interface 3 according to the present invention comprises a safety system 5. Said safety system 5 is at least adapted to suitably lock a plug 4 in association with charging socket 2 during a charging procedure for charging said at least one battery; and to allow said plug 4 to be decoupled from charging socket 2 at the end of said charging procedure.

Said safety system 5 is integrated, at least partly, in supporting structure 32 of interface 3.

Moreover, said safety system 5 is driven by said data processing unit 30.

The present invention provides a modular system comprising said safety system 5 and said interface 3. Interface 3, comprising said safety system 5, is easily applicable to charging sockets 2, even existing ones. In particular, said safety system 5 and said interface 3 define an assembly which is fully integrated both structurally and from a control viewpoint.

By integrating safety system 5 into interface 3, the present invention makes it possible to adapt interface 3 as required by the market, since it can be easily adapted to different models or types of charging sockets 2 and/or vehicles 1, whether commercial vehicles or simple cars. The present invention results in lower production costs, since it avoids any redundancy of devices like, for example, control units, while making said interface 3 and said safety system 5 more structurally compact. Furthermore, the present invention results in lower assembly and maintenance costs.

In a preferred embodiment of interface 3 according to the present invention, said safety system 5 comprises: at least one locking element 52 and at least one actuator device 51.

Said locking element 52 is adapted to selectively allow or prevent the separation of said plug 4 from said charging socket 2.

Said actuator device 51 is adapted to selectively activate said locking element 52.

In one possible, but merely illustrative and non-limiting, embodiment of interface 3 according to the present invention, said at least one locking element 52 is adapted to selectively interact with said plug 4, for the purpose of selectively locking or releasing said plug 4. In the present embodiment, said at least one actuator device 51 is adapted to suitably move said locking element 52.

In the present embodiment, said locking element 52 is integrated into supporting structure 32 of interface 3, e.g. positioned in proximity to charging socket 2.

In an alternative embodiment of interface 3 according to the present invention, and particularly of safety system 5, said at least one locking element 52 is, at least partly, located in said plug 4. In the present embodiment, said actuator device 51 is adapted to suitably control said locking element 52 in order to selectively lock said plug 4 in association with, or allow it to be removed from, said charging socket 2.

In the present embodiment, said locking element 52 is at least partly incorporated into the structure of plug 4, and is adapted to interact with said actuator device 51 when said plug 4 is mechanically connected to charging socket 2, in particular in order to let a battery charging current flow. In such an embodiment, said safety system 5, particularly said locking element 52, is at least partly structurally distributed between interface 3 and plug 4 adapted to be inserted into charging socket 2. Preferably, plug 4 includes passive parts of safety system 5, while the active and computational parts are concentrated in interface 3.

More generally, depending on specific requirements and/or user's needs, interface 3 according to the present invention may be implemented with either a centralized configuration or a distributed configuration.

Describing now in further detail one possible embodiment of interface 3 according to the present invention, said locking element 52 is a latch. Said latch is adapted to fit into both a housing 22 formed in the structure of charging socket 2 and in the structure of said plug 4, thereby preventing the separation of said plug 4 from charging socket 3 when said safety system 5 is in a lock configuration.

According to some alternative embodiments of locking element 52, for example, electromagnets are used in order to prevent the separation of plug 4 from charging socket 2 when said safety system 5 is in a lock configuration, by exploiting magnetic attraction forces.

Describing now in further detail some possible embodiments of interface 3 according to the present invention, said actuator device 51 is one or more of: a direct-current motor, a solenoid; a linear piezoelectric actuator, an electromagnet; etc.

By way of example, said latch may be moved mechanically through a kinematic system connecting it to actuator device 51, implemented as an electric motor or a piezoelectric actuator. Alternatively, said locking element 52 is a ferromagnetic element which can be moved by a magnetic field generated by said actuator device 51, which may be a solenoid or an electromagnet.

Said actuator device 51 is adapted to move said at least one locking element 52, causing said locking element 52 to make one or more movements, e.g. a linear movement, a translational movement, a rototranslational movement.

In one possible, but merely illustrative and non-limiting, embodiment of safety system 5, it comprises a manual unlocking device (not shown). Said manual unlocking device is adapted to bring safety system 5 back into a release configuration from a lock configuration, particularly in the event that said safety system 5, e.g. said actuator device 51, is malfunctioning. In particular, said manual unlocking device is adapted to disable the action of said actuator device 51, so that said locking element 52 will allow said plug 4 to be separated from said charging socket 2. Said manual unlocking device is adapted to act upon actuator device 51, should said actuator device be malfunctioning for any reason, e.g. in case of jamming and/or seizure of safety system 5 in the lock configuration, e.g. due to malfunctions. In one possible embodiment, the manual unlocking device is adapted to act directly upon actuator device 51, causing it to switch, e.g. by turning the power off, and move said locking element 52. Alternatively, said manual unlocking device acts upon the kinematic system or mechanism transmitting at least one movement from actuator device 51 to locking element 52, interrupting the transmission of motion and moving said locking element 52.

More generally, the action upon the actuator device and the movement of locking element 52 occur manually.

In a preferred, but merely illustrative and non-limiting, embodiment, said manual unlocking device comprises a lever that can be operated by means of a cable or a handle accessible to the user, even when interface 3 is located in compartment 11. By pulling said cable or handle, the user can act upon actuator device 51, e.g. upon gears comprised therein, causing them to rotate.

More generally, said manual unlocking device is adapted to disable the action of actuator device 51 upon locking element 52, so that locking element 52 will allow plug 4 to be removed from charging socket 2; therefore, said manual unlocking device must be designed as a function of the type of actuator device 51 employed, of any transmission of motion between actuator device 51 and locking element 52, and/or of the type of locking element 52.

Any further possible embodiments of safety system 5 not expressly described or illustrated herein, which utilize one or more locking elements moved either directly or indirectly by an actuator device capable of selectively allowing or preventing the separation of said plug 4 from said charging socket 2, should be considered to fall within the protection scope of the present invention.

Preferably, said interface 3 according to the present invention comprises at least one button 34. Said button 34 is adapted to allow the user to provide inputs or commands via interface 3.

In interface 3 according to the present invention, said button 34 is electronically connected to said processing unit 30, which is adapted to appropriately process the inputs or commands entered by means of said button 34. Preferably, said inputs or commands are suitably processed by said processing unit 30.

In particular, said button 34 may be configured, for example through said processing unit 30, to enter commands for controlling said safety system 5. For example, through said button 34 the user can switch said safety system 5 from a release configuration to a lock configuration, and vice versa.

Preferably, said at least one button 34 is a tactile button comprising a touch sensor. Said touch sensor is of the optical and/or capacitive type. Alternatively, said button 34 is a mechanical push-button.

In a preferred, but merely illustrative and non-limiting, embodiment, said interface 3 comprises at least one sensor 31. Said at least one sensor 31 is adapted to determine the position of said closing element 10; for example, it is adapted to determine the position of said closing element 10 relative to said compartment 11, e.g. to determine whether said closing element 10 is closed, thus preventing the user from accessing said compartment 11, and hence said charging socket 2, or open, thus allowing the user to gain access to said compartment 11, and hence to said charging socket 2.

Said sensor 31 is electronically connected to said processing unit 30. Said processing unit 30 is adapted to process the data coming from said sensor 31, for the purpose of determining, for example, whether said closing element 10 is open or closed.

Interface 3 according to the present invention comprises at least one sensor 31, which is a proximity sensor of the optical, capacitive and/or ultrasonic type.

In one possible, but merely illustrative and non-limiting, embodiment of interface 3 according to the present invention, said at least one visual feedback element 33 consists of one or more LEDs and/or a display.

In a preferred, but merely illustrative and non-limiting, embodiment of interface 3 according to the present invention, said at least one button 34 is provided in the structure of said display 33. In the present embodiment, said display 33 is a touchscreen capable of providing programmable keys, or "soft keys", that can control a plurality of functions according to their programming.

In one possible, but merely illustrative and non-limiting, embodiment of interface 3 according to the present invention, said visual feedback elements 33 comprise illuminating elements 332 adapted to illuminate charging socket 2 for the purpose of facilitating the identification of the position of charging socket 2 and the insertion of plug 4 into said charging socket 2.

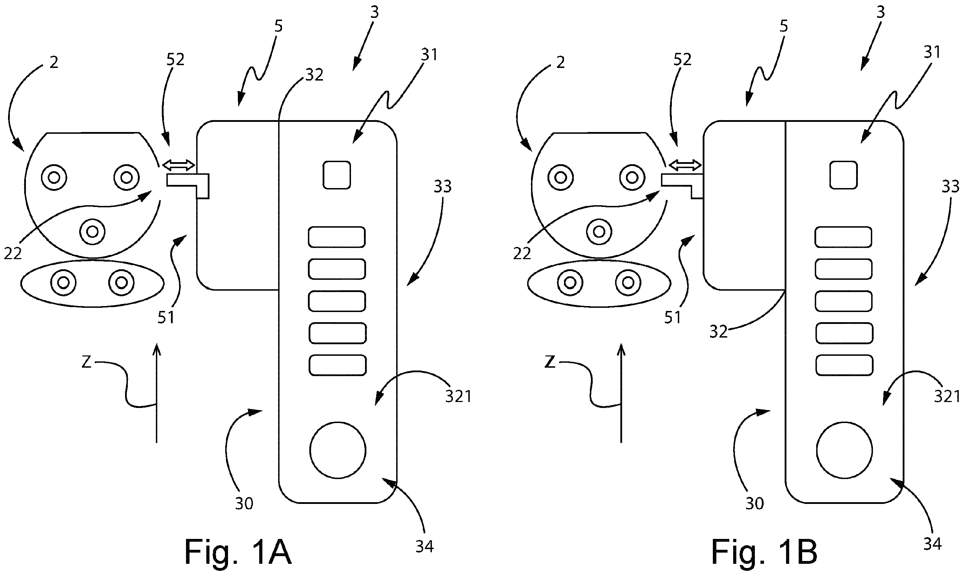

Figure 1A shows a schematic view of one possible, but merely illustrative and non-limiting, embodiment of interface 3 according to the present invention, which incorporates safety system 5, which here is in a release configuration.

In this figure safety system 5 is visible, which comprises an actuator device 51 capable of moving a locking element 52, which is adapted to fit, at least partly, into a housing 22 comprised in charging socket 2. In the present embodiment, a plug 4 is adapted to be inserted into and coupled with said charging socket 2. Said plug 4 comprises in its structure, particularly in its external structure or casing, a housing which is similar to the one that can be found in charging socket 2, e.g. a through hole, into which said locking element 52 will fit at least partly. In the present embodiment, said locking element 52 consists of a latch.

In the present embodiment, said plug 2 is designed using, by way of non-limiting example, the CCS COMB02 technology. Charging socket 2 and said interface 3 according to the present invention are arranged side by side, with said safety system 5 in full proximity to charging socket 2.

Figure 1A shows an interface 3 that comprises visual feedback elements 33 in the form of a plurality of light sources, e.g. LEDs, adapted to provide the user with information about the charging state of at least one battery comprised in vehicle 1. Under said visual feedback elements 33 there is a button 34, through which the user can, for example, start or stop a charging procedure, e.g. by activating or deactivating said safety system 5. By way of example, said button 34 can be easily identified by the user, e.g. because it is defined by an area in a different colour than the remaining part of contact surface 321.

In the illustrated embodiment of interface 3, above the visual feedback elements 33, e.g. in a peripheral portion of the supporting structure 32, there is a proximity sensor 31 adapted to detect the state of a closing element or door, adapted to close the compartment that houses said charging socket 2, and preferably also said interface 3, according to the present invention.

Figure 1B schematically shows one possible, but merely illustrative and non-limiting, embodiment of interface 3 according to the present invention, wherein the safety system 5 is in a lock configuration. Figure 1B is similar to Figure 1A as concerns charging socket 2 and interface 3, but safety system 5 is shown in the lock configuration. As visible in Figure 1B, said locking element 52 is inserted, at least partly, in housing 22 comprised in charging socket 2. In this configuration, said locking element 52, in the form of a latch, interacts with charging socket 2, and is consequently also adapted to interact with plug 4, which may have been inserted in the same charging socket 2, thus preventing said charging socket 2 and said plug 4 from separating from each other. In fact, said locking element 52 fits into a housing, e.g. a through hole, not shown, formed in the external structure of plug 4.

More generally, said interface 3 is particularly suitable for being associated with and/or comprised in a charging socket 2 for charging batteries of vehicles 1.

Said charging socket 2 is adapted to be arranged in a compartment 11 located outside a passenger compartment of vehicle 1. More particularly, said compartment 11 can be closed by means of a closing element 10, e.g. a door. For example, said door 10 is connected to vehicle 1 by connecting means 102 that allow said door 10 to make a movement, e.g. a rotational movement, by turning about an axis parallel to said vertical axis "Z".

Said charging socket 2 is adapted to be connected to a battery charger "C" by means of a cable "c1" comprising, at one end thereof, e.g. at a distal end of cable "c1", a plug 4 adapted to be inserted into said charging socket 2 for charging said batteries.

Said charging socket 2 is also electrically connected to a battery charging system of vehicle 1 (not shown).

Said charging socket 2 according to the present invention comprises an interface 3 according to the present invention, which comprises a safety system 5. Said safety system 5 is adapted to ensure that the procedure for charging a battery of vehicle 1 is conducted correctly.

Preferably, said charging socket 2 comprises a housing 22, e.g. a through hole, adapted to interact with said locking element 52 of safety system 5 to secure said plug to said charging socket 2 while charging the batteries of a vehicle 1.

Said charging socket 2 according to the present invention is configured in accordance with one of the following standards: Shuko; Type 1 Yazaki; Type 2 Mennekes; Type 3 Scame; CHAdeMO; CCS COMB01; CCS COMBO2, etc.

As a result, plug 4 adapted to be coupled with said charging socket 2 is made in compliance with the same standard adopted for charging socket 2 with which said plug 4 is adapted to be coupled.

Said charging socket 2 and said plug 4 make up an assembly, which is an object of the present invention.

More generally, said locking element 52 is at least partly positioned in the structure of plug 4.

The type of charging socket 2, and hence of said plug 4, will depend on the manufacturer of vehicle 1 and/or the market where vehicle 1 will be sold and used.

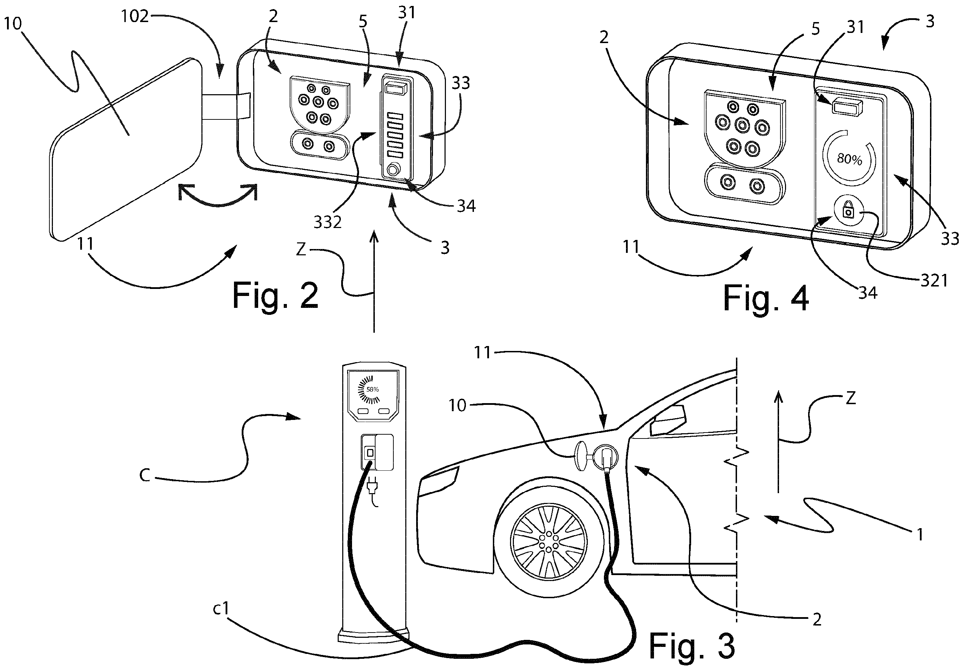

Figure 2 shows a schematic view of an interface 3 according to the present invention associated with a charging socket 2 for vehicles 1, wherein the compartment 11 can be closed by means of a door 10.

In the illustrated embodiment, said compartment 11 has a rectangular shape and houses a charging socket 2, which is shown to be, merely by way of non-limiting example, a socket of the CCS COMBO2 type. Beside it there is an interface 3 according to the present invention.

Said compartment 11 is adapted to be closed, thus preventing access to said charging socket 2, by means of a door 10. Said door 10 has a shape which is complementary to the shape of compartment 11. Said door 10 is connected to vehicle 1 by connecting means 102, which allow said door 10 to make a rotational movement, e.g. by turning about an axis parallel to said vertical axis "Z".

Said interface 3 further comprises a safety system 5 adapted to suitably lock a plug into charging socket 2 during the battery charging procedure and to release said plug at the end of the charging procedure.

Interface 3 illustrated in Figure 2 shows illuminating elements 332 adapted to illuminate charging socket 2 in order to facilitate the identification of the position of charging socket 2 and the insertion of plug 4 into said charging socket 2.

In Figure 2 visual feedback elements 33 are visible in the form of a plurality of light sources, e.g. LEDs, adapted to provide the user with information about the charging state of at least one battery comprised in vehicle 1.

Under said visual feedback elements 33 there is a button 34, through which the user can, for example, start or stop a charging procedure, e.g. by controlling said safety system 5. By way of example, said button 34 can be easily identified by the user, e.g. being defined by an area in a different colour than the remaining part of contact surface 321.

In the illustrated embodiment of interface 3, above the visual feedback elements 33, e.g. in a peripheral portion of supporting structure 32, there is a proximity sensor 31 adapted to detect the state of a closing element or door 10.

Figure 4 shows a schematic view of yet another illustrative and non-limiting embodiment of interface 3 according to the present invention, associated with a charging socket 2 for vehicles 1.

In this figure one can see that interface 3 is arranged beside a charging socket 2, and both are housed in a compartment 11 comprised in a vehicle 1.

In the illustrated embodiment, said compartment 11 has a rectangular shape and houses a charging socket 2, which is shown to be, merely by way of non-limiting example, a socket of the CCS COMBO2 type, beside which there is an interface 3 according to the present invention.

Said interface 3 further comprises a safety system 5 adapted to suitably lock a plug 4 into charging socket 2 during the battery charging procedure and to release said plug at the end of the charging procedure.

Figure 4 shows an interface 3 comprising a display 33 that shows a thorough graphic representation of the state of charge of a battery, particularly by means of a circular bar, providing also a numerical indication, particularly a percentage value. The same display 33 shows a padlock, which allows the user to identify the position of button 34, through which one can, for example, start or stop a charging procedure, being in particular adapted to control said safety system 5 by switching it between the release configuration and the lock configuration.

In the present embodiment, contact surface 321 corresponds to the surface of display 33. By way of example, when the user presses contact surface 321, in particular display 33, in the area of the symbol associated with said button 34, which in the illustrated embodiment is represented as a padlock, the user can enter inputs or commands, e.g. for controlling said safety system 5.

In the illustrated embodiment of interface 3, above display 33, in a peripheral portion of supporting structure 32, there is a proximity sensor 31 adapted to detect the state of a closing element or door (not shown).

Said display 33 may comprise a haptic actuator adapted to generate haptic feedback by causing the contact surface to vibrate when a user touches such contact surface, at least in the area of a button 34.

As aforementioned, interface 3 and/or said charging socket 2 according to the present invention are particularly suitable for being employed and/or comprised in a vehicle 1.

Said vehicle 1 comprises at least one electric motor, e.g. adapted to move vehicle 1, and at least one battery (not shown). Said at least one battery is adapted to be recharged and to supply power to said electric motor.

Vehicle 1 according to the present invention comprises a compartment 11 positioned outside a passenger compartment (not shown) of vehicle 1. In said compartment 11 at least one charging socket 2 is positioned, e.g. in a suitable housing, for charging said at least one battery.

Said compartment 11 can be selectively closed by means of a closing element 10, e.g. a door.

Said compartment 11 advantageously houses also said interface 3, which incorporates a safety system 5 according to the present invention.

Said compartment 11 can be selectively closed by means of a closing element 10, e.g. a door.

Vehicle 1 according to the present invention comprises at least one interface 3 according to the present invention.

Interface 3 according to the present invention is adapted to interface with other control units of vehicle 1, e.g. through said processing unit 30, e.g. by implementing communication protocols commonly used in the automotive industry such as, for example, CAN or LIN.

Said interface 3 is positioned in said compartment 11, e.g. in a suitable housing, preferably in proximity to said charging socket 2.

In vehicle 1 according to the present invention comprising an interface 3 according to the present invention, said closing element 10 may be made of any material and may have any shape. Moreover, said closing element 10 may have any shape or size, without jeopardizing the proper operation of sensor 31, which will anyway be able to detect whether said closing element 10 is in a closed configuration, thus preventing a user from accessing said compartment 11, and hence said charging socket 2, or in an open configuration, thus allowing a user to gain access to said compartment 11, and hence to said charging socket 2.

In vehicle 1 according to the present invention, said closing element 10, in particular a door, may be connected to vehicle 1 by connecting means 102. Said connecting means 102 are adapted to allow said closing element 10 to make one or more rotational, translational or rototranslational movements.

Figure 3 shows a schematic view of a portion of a vehicle 1 comprising a charging socket 2, housed in a compartment 11, to which a plug 4 terminating a cable "c1" of a battery charger "C" is connected.

In this figure, one can see a door 10 in an open configuration and a plug 4 at one end of a cable "c1" inserted into said charging socket 2.

It is apparent from this figure that said compartment 11 is external to the passenger compartment of vehicle 1. In the illustrated embodiment, it is arranged in a front lateral portion of vehicle 1. The position of compartment 11 may however be different, e.g. in a front portion of the vehicle, or in a rear portion, e.g. near the point where the fuel tank filler neck is, or was, located.

During the procedure for charging the batteries of vehicle 1, safety system 5 is adapted to lock plug 4 into charging socket 2.

The present invention makes it possible to integrate also safety system 5 into interface 3, thereby broadening the functionality of interface 3 and simplifying the production and installation of charging sockets 2.

The present invention provides a modular element including both interface 3 and the safety system, which can be used for different applications, whether industrial vehicles or common cars.

The present invention makes it possible to share units and systems between two entities that were previously completely independent and separate.

The present invention makes it possible to implement many possible embodiments, since it can be adapted to the requirements of the vehicle manufacturer and/or final user.

Any alternative embodiments of interface 3 which have not been described in detail herein, but which will be apparent to a person skilled in the art in light of the contents of the present patent application, shall be considered to fall within the protection scope of the present invention.

**REFERENCE NUMERALS**

| | |
|---|---|
| Vehicle | 1 |
| Closing element | 10 |
| Connecting means | 102 |
| Compartment | 11 |
| Charging socket | 2 |
| Housing | 22 |
| Interface | 3 |
| Processing unit | 30 |
| Sensor | 31 |
| Supporting structure | 32 |
| Contact surface | 321 |
| Visual feedback elements | 33 |
| Illuminating elements | 332 |
| Button | 34 |
| Plug | 4 |
| Safety system | 5 |
| Actuator device | 51 |
| Locking element | 52 |
| Battery charger | "C" |
| Cable | "c1" |
| Vertical axis | "Z" |

## Claims

1. Interface (3) for charging sockets (2) of vehicles (1), adapted to return to the user of a charging socket (2) information about the charging state of at least one battery comprised in the vehicle (1);
said interface (3) is adapted to be housed in a compartment (11) positioned outside a passenger compartment of the vehicle (1), in which said charging socket (2) can be positioned;
said interface (3) comprising:
- a supporting structure (32) extending along a vertical axis (Z);
- a processing unit (30) adapted to process the data relating to the charging of said battery;
- at least one visual feedback element (33) adapted to, at least partly, return to the user visual information about the charging state of said at least one battery, said at least one visual feedback element (33) being driven by said processing unit (30);
said interface (3) being **characterized in that** it comprises a safety system (5) adapted to:
- suitably lock a plug (4) in association with the charging socket (2) during a charging procedure for charging said at least one battery;
- allow said plug (4) to be disconnected from the charging socket (2) at the end of said charging procedure;
said safety system (5) being integrated, at least partly, in the supporting structure (32) of the interface (3);
said safety system (5) being driven by said processing unit (30) .

2. Interface (3) according to claim 1, wherein said safety system (5) comprises:
- at least one locking element (52) adapted to selectively allow or prevent the separation of said plug (4) from said charging socket (2);
- an actuator device (51) adapted to selectively activate said locking element (52).

3. Interface (3) according to claim 2, wherein:
- said at least one locking element (52) is adapted to selectively interact with said plug (4), for the purpose of selectively locking or releasing said plug (4);
- said actuator device (51) is adapted to suitably move said locking element (52).

4. Interface (3) according to claim 2 or 3, wherein said locking element (52) is a latch adapted to fit both into a housing (22) formed in a structure of the charging socket (2) and into a structure of said plug (4).

5. Interface (3) according to claim 2, 3 or 4, wherein said actuator device (51) is one or more of:
- a direct-current motor,
- a solenoid;
- a linear piezoelectric actuator;
- an electromagnet, etc.

6. Interface (3) according to claim 2, wherein:
- said at least one locking element (52) is located, at least partly, in said plug (4);
- said actuator device (51) is adapted to suitably control said locking element (52) in order to selectively lock said plug (4) in association with said charging socket (2) or allow the disconnection thereof.

7. Interface (3) according to any of the preceding claims, wherein said safety system (5) and said interface (3) define an assembly.

8. Interface (3) according to any of the preceding claims, wherein at least one button (34) is comprised, adapted to allow the user to provide inputs or commands via the interface (3), electronically connected to said processing unit (30), which is adapted to suitably process the inputs or commands entered via said button (34);
said button (34) being a tactile button comprising a touch sensor, a mechanical button, or being made in the structure of a touchscreen (33).

9. Interface (3) according to claim 8, wherein said button (34) is configured, for example through said processing unit (30), to enter commands for controlling said safety system (5), for example to switch said safety system (5) from a release configuration to a lock configuration, and vice versa.

10. Charging socket (2) for charging batteries of vehicles (1), adapted to be arranged in a compartment (11) positioned outside a passenger compartment of the vehicle (1);
said charging socket (2) is adapted to be connected to a battery charger (C) by means of a cable (c1) comprising, at one end thereof, a plug (4) adapted to be inserted into said charging socket (2);
said charging socket (2) being electrically connected to a battery charging system of the vehicle (1);
said charging socket (2) being **characterized in that** it comprises an interface (3) according to one of the preceding claims.

11. Charging socket (2) according to claim 10, wherein said charging socket (2) is configured in accordance with one of the following standards:
- Shuko;
- Type 1 Yazaki;
- Type 2 Mennekes;
- Type 3 Scame;
- CHAdeMO;
- CCS COMB01;
- CCS COMBO2.

12. Charging socket (2) according to claim 10, wherein said locking element (52) is at least partly located in the structure of the plug (4).

13. Vehicle (1) comprising an electric motor and at least one battery adapted to be recharged and to supply power to said electric motor;
said vehicle (1) comprising a compartment (11) positioned outside a passenger compartment of the vehicle (1), in which a charging socket (2) is housed for charging said at least one battery; said compartment (11) being selectively closable by means of a closing element (10);
said vehicle (1) being **characterized in that** it comprises an interface (3) according to claim 1.
